# EUROPÄISCHE PATENTSCHRIFT

(11) **EP 0 748 467 B1**
(45) Veröffentlichungstag und Bekanntmachung des Hinweises auf die Patenterteilung: **06.05.1998**
(21) Anmeldenummer: 95908877.4
(22) Anmeldetag: 08.02.1995
(51) Int. Cl.: G05B 13/02

(54) **SELBSTPROGRAMMIERENDE SCHALTUNGSANORDNUNG**
SELF-PROGRAMMING CIRCUIT
CIRCUIT A AUTO-PROGRAMMATION

(30) Priorität: 28.02.1994 DE 4406498
(43) Veröffentlichungstag der Anmeldung: 18.12.1996
(73) Patentinhaber: SIEMENS AKTIENGESELLSCHAFT, 80333 München (DE)
(72) Erfinder: EICHFELD, Herbert, D-80538 München (DE); LEDERLE, Reiner, D-80801 München (DE)
(86) Internationale Anmeldenummer: DE9500161
(87) Internationale Veröffentlichungsnummer: WO9523360

(56) Entgegenhaltungen:
- EP-A- 0 239 283
- EP-A- 0 241 286
- EP-A- 0 489 913
- GB-A- 2 211 324
- US-A- 5 241 651

## Beschreibung

Um ein möglichst optimales Betriebsverhalten eines Gesamtsystems zu gewährleisten, ist eine jeweilige zum Gesamtsystem gehörige Schaltungsanordnung sinnvollerweise auf den Rest des Gesamtsystems abgestimmt. Ändert sich nun der Rest des Gesamtsystems, beispielsweise durch Alterung, Verschleiß oder aber weil der Rest des Gesamtsystems auf Grund eines vielfältigen Typenspektrums unterschiedliche Eigenschaften aufweist, so liegt im allgemeinen kein optimales Betriebsverhalten mehr vor.

Aus der US-Patentschrift 5 259 063 ist eine selbstprogrammierende Schaltungsanordnung bekannt, bei der eine Verarbeitungseinheit mit einem elektrisch löschbaren und elektrisch programmierbaren Festwertspeicher (EEPROM), eine Klassifizierungseinheit in Form eines Central Processors und eine Schnittstelleneinheit vorgesehen sind, wobei die Verarbeitungseinheit Verarbeitungsinformationen aus dem Festwertspeicher ausliest, bei der Eingangswerte und/oder interne Werte in der Klassifizierungseinheit zu Klasifizierungsergebnissen verarbeitet werden, wobei die Eingangswerte der Schaltungsanordnung auch Eingangswerte der selbstprogrammierenden Verarbeitungseinheit darstellen, und bei der eine Schnittstelleneinheit derart vorgesehen ist, daß aus einem der Klassifizierungsergebnisse mindestens eine EEPROM-Adresse und mindestens ein EEPROM-Datum (ED) erzeugt und damit der Festwertspeicher (EEPROM) programmiert wird.

Ferner ist aus der deutschen Offenlegungsschrift 39 11 186 A1 eine selbständige Klassifizierungseinheit in Form einer Unschärfe-Beurteilungseinrichtung bekannt, der die Eingangs- und Ausgangswerte der selbsteinstellenden Schaltungsanordnung 1 in Form einer Differenz zugeführt werden, und die aus den Klassifikationsergebnissen neue Regelkonstanten auf der Basis von Fuzzy-Regeln bestimmt, sofern ein externe Freigabesignal vorhanden ist.

Weiter ist aus der Zeitschrift Elektronik 4/1986, Seiten 79 bis 83 ein Regler bekannt, der sich der Alterung seiner angeschlossenen Hardware durch selbständiges Umprogrammieren anpaßt und bei dem ein programmierbarer Speicher mit einer Verarbeitungseinheit auf einem Chip integriert ist.

Die der Erfindung zugrundeliegende Aufgabe besteht nun darin, eine Schaltungsanordnung anzugeben, die in der Lage ist, die obengenannten Veranderungen zu erkennen, zu bewerten und ihre Eigenschaften entsprechend zu ändern, um sich an die veränderten externen Gegebenheiten besser anzupassen und dadurch optimalere Regelungseigenschaften oder eine schnellere Verarbeitung zu erreichen.

Diese Aufgabe wird durch die Merkmale des Patentanspruchs 1 erfindungsgemäß gelöst.

Ein wesentlicher Vorteil der Erfindung besteht darin, daß die gesamte erfindungsgemäße, selbstprogrammierende Schaltungsanordnung aufgrund des verhältnismäßig geringen schaltungstechnischen Mehraufwands einfach monolithisch integrierbar ist und daß die Schaltungsanordnung nur aus einem einzelnen Bauelement mit sehr wenigen externen Anschlüssen besteht.

Die Ansprüche 2 bis 7 betreffen vorteilhafte Ausgestaltungen der erfindungsgemäßen Anordnung.

Die Erfindung wird im folgenden anhand der Zeichnung näher erläutert. Dabei zeigt:
- Figur 1: ein Blockschaltbild einer erfindungsgemäßen, selbstprogrammierenden Schaltungsanordnung und
- Figur 2: ein Blockschaltbild eines Teiles einer bevorzugten Ausgestaltung der erfindungsgemäßen, selbstprogrammierenden Schaltungsanordnung.

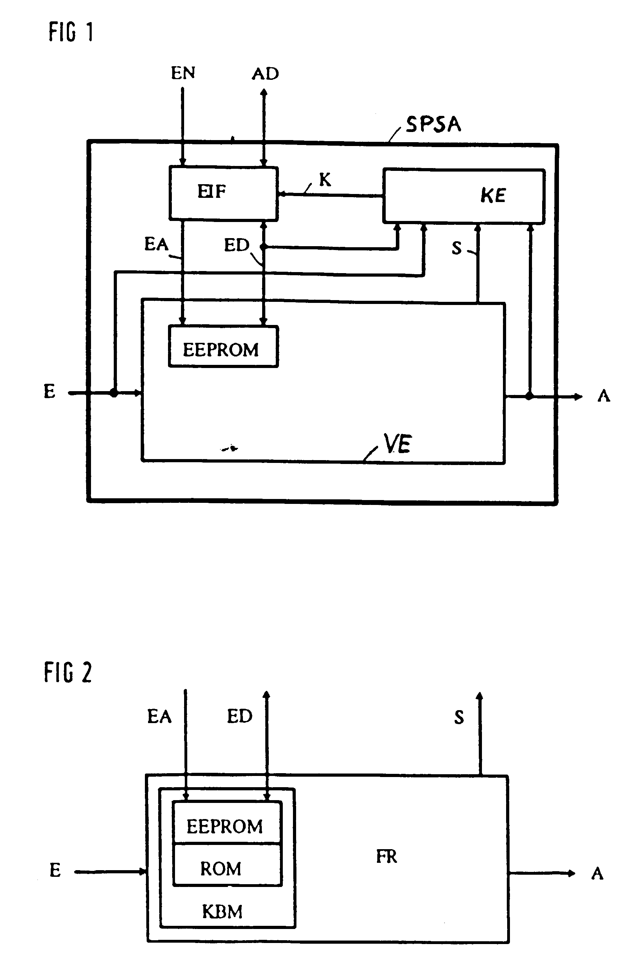

In der Figur 1 ist ein Blockschaltbild einer erfindungsgemäßen, selbstprogrammierenden Schaltungsanordnung SPSA gezeigt, bei der eine Verarbeitungseinheit VE mit einem elektrisch lösch- und programmierbaren Festwertspeicher EEPROM, eine Klassifizierungseinheit KE und eine Schnittstelleneinheit (EEPROM-Interface) EIF vorgesehen sind. Die gesamte erfindungsgemäße Schaltungsanordnung befindet sich dabei vorzugsweise monolithisch integriert auf einem gemeinsamen Halbleiter-Chip und weist nur externe Eingänge für ein Freigabesignal (Enable) EN, einen Adreß/Datenbus AD, Eingangswerte E und Ausgangswerte A der Verarbeitungseinheit VE auf.

Der Klassifizierungseinheit KE sind die Eingangswerte E und/oder interne Werte ED,S und/oder die Ausgangswerte A zugeführt und werden dort zu einem Klassifikationsergebnis K verarbeitet, das seinerseits der Schnittstelleneinheit EIF zugeführt ist. Die Klassifikationseinheit KE entscheidet, ob ein EEPROM-Datum verändert werden soll oder nicht und in welcher Weise dies gegebenenfalls zu geschehen hat. Die Klassifikationseinheit KE ist vorzugsweise wie ein Fuzzy Regler aufgebaut, wobei die Klassifizierungsstrategie in Form von WENN-DANN-Regeln formuliert und in einem Wissensspeicher der Klassifikationseinheit gespeichert ist. Der Wissensspeicher der Klassifikationseinheit KE ist dabei ebenfalls monolithisch auf dem Halbleiter-Chip der selbstprogrammierenden Schaltungsanordnung integriert.

Die WENN-DANN-Regeln sind typischer Weise von der Form **WENN** (E=W_{E}) **UND** (ED=W_{ED}) **UND** (S=W_{S}) **UND** (A=W_{A}) **DANN** (K=W_{K}), wobei W_{X} den linguistischen Wert der Variablen X darstellt. Die Werte W_{X} sind dabei in einem Nur-Lese-Speicher (ROM) abgelegt, es besteht jedoch auch die Möglichkeit den Wissensspeicher ebenfalls in Form eines elektrisch lösch- und programmierbaren Festwertspeichers (EEPROM) auszuführen und eine weitere, übergeordnete Klassifikationseinheit vorzusehen, die die Wissensbasis der untergeordneten Klassifikationseinheit verändert. Dieses Prinzip läßt sich im Grunde auf beliebig viele Hierarchieebenen verallgemeinern.

Da es in vielen Fällen ausreicht, daß für jede Klasse, also für jeden unterschiedlichen Wert, den K annehmen kann, jeweils nur eine einzige Regel vorgesehen ist, sind auch relativ einfach aufgebaute Klassifikationseinheiten mit festverdrahteten WENN-DANN-Regeln vorstellbar.

Die Verarbeitungseinheit VE besteht beispielsweise im einem Fuzzy Regler, kann aber auch in anderen mikroelektronischen Systemen, zum Beispiel in einem Mikroprozessor oder Mikrocontroller bestehen. Wesentlich ist hierbei, daß die Verarbeitungseinheit ein Auslesen des Festwertspeichers EEPROM ermöglicht und auf diese Weise ein Zugriff auf den von der Schaltungsanordnung SPSA selbst programmierten Teil der Verarbeitungsinformationen möglich ist und daß die Größen E, A und S in digitaler Form vorliegen. Ist letzteres nicht der Fall, so ist zusätzlich eine entsprechende A/D-Wandlung erforderlich.

In Figur 2 ist ein Blockschaltbild einer Verarbeitungseinheit VE in Form eines Fuzzy Reglers FR gezeigt, der einen Wissensbasisspeicher enthält, der seinerseits einen Nur-Lese-Speicher ROM und den Festwertspeicher EEPROM aufweist. Die Eingänge E sind hier die Regeldifferenzen, die Ausgänge A die Stellgrößen, die auf eine Regelstrecke wirken.

Durch Umprogrammieren des Festwertspeichers EEPROM kann dabei, zum Beispiel ausgelöst durch langsame Änderungen der Regelstrecke, wie zum Beispiel Alterung bzw. Verschleiß, folgendes bewirkt werden:
1. Eine erneute Festlegung eines von mindestens zwei alternativen Offset-Werten für den Eingangswert (E) und/oder für den Ausgangswert (A) durch die EEPROM-Adresse EA.
2. Eine erneute Festlegung eines von mindestens zwei alternativen Offset-Werten, der zu einer Startadresse für Zugehörigkeitsadressen addiert wird, um das Funktionsspektrum nach links oder rechts zu schieben, durch eine EEPROM-Adresse EA, wobei dies natürlich voraussetzt, daß die auf diese Weise neu adressierten Speicherbereiche mit einer entsprechenden Ergänzung des Funktionsspektrums belegt sind.
3. Eine erneute Festlegung der Regelzahl, um neue, zwar bereits gespeicherte aber nicht im Adreßraum befindliche Regeln mit aufzunehmen oder bisherige Regeln aus dem Adreßraum zu entfernen.
4. Eine erneute Festlegung des Regelgewichts von mindestens einer Regel durch eine EEPROM-Adresse EA.

Ferner kann durch Umprogrammieren des Festwertspeichers EEPROM, zum Beispiel ausgelöst durch sprunghafte Veränderungen der Regelstrecke, folgendes bewirkt werden:
1. Eine erneute Festlegung einer von mindestens zwei alternativen Regelauswertungs-Methoden und/oder eine von mindestens zwei alternativen Inferenz-Methoden und/oder eine von mindestens zwei alternativen Defuzzifikations-Methoden durch eine EEPROM-Adresse EA.
2. Eine erneute Festlegung eines Regelsatzes zum Beispiel für einen neuen Produkttyp oder für spezielle "Notregeln" im Falle von extremen Betriebszuständen, wie beispielsweise bei Beschädigungen der Regelstrecke, durch eine EEPROM-Adresse als Startadresse.
3. Eine erneute Festlegung von Eingangs- bzw. Ausgangszugehörigkeitsfunktionen durch eine EEPROM-Adresse als Startadresse.

Die obengenannten Festlegungen können dabei einzeln oder aber in Kombination auftreten. Wieviele EEPROM-Adressen im Einzelfall hierfür erforderlich sind, hängt beispielsweise von der Wortbreite der EEPROM-Adressen und von der Art der Kodierung der obengenannten Festlegungen ab.

Die internen Werte S können in diesem Fall Informationen, ob eine Regel eines Regelsatzes getroffen wurde, oder Regelgewichte in irgendeiner Form an die Klassifikationseinheit liefern.

Statt eines Reglers läßt sich als Verarbeitungseinheit (VE) ein Mikroprozessor einsetzen, dessen Programmspeicher den Festwertspeicher EEPROM beinhaltet. Im Festwertspeicher EEPROM sind Befehle abgelegt, die die Klassifikationseinheit KE zum Beispiel durch Befehle ersetzt, die die Laufzeit eines Programmes verkürzen.

Erfolgt beispielsweise bei der Verarbeitung eine Fallunterscheidung nach Bereichen für die Eingangswerte (E), wobei die Eingangswerte unterschiedlich häufig auftreten, und werden die Werte innerhalb der Bereiche mit verschieden lange dauernden Programmteilen verarbeitet, so kann die Klassifikationseinheit (KE) beispielsweise so ausgebildet sein, daß sie die Häufigkeit des Auftretens der Bereiche der Eingangswerte (E) ermittelt und den Festwertspeicher so umprogrammiert, daß die Reihenfolge der Fallunterscheidungen nach der Häufigkeit des Auftretens der zugehörigen Bereiche durchgeführt wird, wobei die zum Bereich mit der größten Häufigkeit gehörende Fallunterscheidung zuerst erfolgt.

Im Zusammenhang mit der erwähnten Typenvielfalt ist insbesondere an verschiedene Versionen von KFZ-Teilen zu denken, deren jeweilige Version durch den erfindungsgemäßen Fuzzy Controller selbständig erkannt wird.

## Patentansprüche

1. Selbstprogrammierende Schaltungsanordnung (SPSA),
- bei der eine Verarbeitungseinheit (VE) mit einem elektrisch löschbaren und elektrisch programmierbaren Festwertspeicher(EEPROM), eine Klassifizierungseinheit (KE) und eine Schnittstelleneinheit (EIF) vorgesehen sind, wobei die Verarbeitungseinheit Verarbeitungsinformationen aus dem Festwertspeicher (EEPROM) ausliest,
- bei der Eingangswerte (E) und/oder interne Werte (ED,S) und/oder Ausgangswerte (A) der Verarbeitungseinheit (VE) in der Klassifizierungseinheit (KE) zu Klassifizierungsergebnissen (K) verarbeitet sind, wobei die Eingangswerte (E) und/oder die Ausgangswerte (A) der Verarbeitungseinheit auch entsprechende Werte der selbstprogrammierenden Schaltungsanordnung (SPSA) darstellen,
- bei der eine Schnittstelleneinheit (EIF) derart vorgesehen ist, daß aus einem der Klassifizierungsergebnisse(K) mindestens eine EEPROM-Adresse(EA) und mindestens ein EEPROM-Datum (ED) erzeugt und damit der Festwertspeicher (EEPROM) programmiert wird, falls ein externes Freigabesignal (EN) vorliegt,
- bei der die Verarbeitungseinheit (VE) aus einem unscharfen (Fuzzy) Regler (FR) besteht, dessen Wissensbasisspeicher (KBM) den Festwertspeicher (EEPROM) beinhaltet,
**dadurch gekennzeichnet,**
- daß die Klassifizierungseinheit (KE) aus den Eingangswerten (E) und/oder internen Werten (ED,S) und/oder Ausgangswerten (A) die Klassifikationsergebnisse (K) auf der Basis eines linguistischen Protokolls, wie bei unscharfen (Fuzzy) Reglern, mit Hilfe von WENN-DANN-Regeln bildet, wobei die Eingangswerte (E) linguistischen Werten der jeweiligen Eingangsvariablen zugeordnet, die linguistischen Werte der Eingangsvariablen mit Hilfe des linguistischen Protokolls mit den linguistischen Werten der Ausgangsvariablen verknüpft und die linguistischen Werte einer Ausgangsvariablen den Klassifizierungsergebnissen (K) zugeordnet werden, und
- daß der Festwertspeicher (EEPROM) derart programmiert ist, daß mit Hilfe einer EEPROM-Adresse (EA) eine von mindestens zwei alternativen Zugehörigkeitsfunktionen für die Eingangsvariable und/oder die Ausgangsvariable ausgewählt ist.

2. Schaltungsanordnung nach Anspruch 1,
bei der der Festwertspeicher (EEPROM) derart programmiert ist, daß mit Hilfe einer EEPROM-Adresse (EA) einer von mindestens zwei alternativen Offset-Werten für den Eingangswert (E) und/oder für den Ausgangswert (A) ausgewählt ist.

3. Schaltungsanordnung nach Anspruch 1 oder 2,
bei der der Festwertspeicher (EEPROM) derart programmiert ist, daß mit Hilfe einer EEPROM-Adresse (EA) einer von mindesten zwei alternativen Regelsätzen ausgewählt und/oder für mindestens eine Regel ein Regelgewicht von mindestens zwei alternativen Regelgewichten ausgewählt ist und/oder die Regelanzahl eines jeweiligen Regelsatzes festgelegt ist.

4. Schaltungsanordnung nach einem der Ansprüche 1 bis 3,
bei dem der Festwertspeicher (EEPROM) derart programmiert ist, daß mit Hilfe einer EEPROM-Adresse (EA) eine von mindestens zwei alternativen Regelauswertungs-Methoden und/oder eine von mindestens zwei alternativen Inferenz-Methoden und/oder eine von mindestens zwei alternativen Defuzzifikations-Methoden ausgewählt ist.

5. Selbstprogrammierende Schaltungsanordnung (SPSA),
- bei der eine Verarbeitungseinheit (VE) mit einem elektrisch löschbaren und elektrisch programmierbaren Festwertspeicher(EEPROM), eine Klassifizierungseinheit (KE) und eine Schnittstelleneinheit (EIF) vorgesehen sind, wobei die Verarbeitungseinheit Verarbeitungsinformationen aus dem Festwertspeicher (EEPROM) ausliest,
- bei der Eingangswerte (E) und/oder interne Werte (ED,S) und/oder Ausgangswerte (A) der Verarbeitungseinheit (VE) in der Klassifizierungseinheit (KE) zu Klassifizierungsergebnissen (K) verarbeitet sind, wobei die Eingangswerte (E) und/oder die Ausgangswerte (A) der Verarbeitungseinheit auch entsprechende Werte der selbstprogrammierenden Schaltungsanordnung (SPSA) darstellen,
- bei der eine Schnittstelleneinheit (EIF) derart vorgesehen ist, daß aus einem der Klassifizierungsergebnisse(K) mindestens eine EEPROM-Adresse(EA) und mindestens ein EEPROM-Datum (ED) erzeugt und damit der Festwertspeicher (EEPROM) programmiert wird, falls ein externes Freigabesignal (EN) vorliegt ,
**dadurch gekennzeichnet,**
daß die Klassifizierungseinheit (KE) aus den Eingangswerten (E) und/oder internen Werten (ED,S) und/oder Ausgangswerten (A) die Klassifikationsergebnisse (K) auf der Basis eines linguistischen Protokolls, wie bei unscharfen (Fuzzy) Reglern, mit Hilfe von WENN-DANN-Regeln bildet, wobei die Eingangswerte (E) linguistischen Werten der jeweiligen Eingangsvariablen zugeordnet, die linguistischen Werte der Eingangsvariablen mit Hilfe des linguistischen Protokolls mit den linguistischen Werten der Ausgangsvariablen verknüpft und die linguistischen Werte einer Ausgangsvariablen den Klassifizierungsergebnissen (K) zugeordnet werden, und daß die Verarbeitungseinheit (VE) in einem Mikroprozessor besteht, dessen Programmspeicher den Festwertspeicher (EEPROM) beinhaltet.

6. Schaltungsanordnung nach Anspruch 5,
bei der, sofern bei der Verarbeitung eine Fallunterscheidung nach Bereichen für die Eingangswerte (E) erfolgt und die Werte innerhalb der Bereiche mit verschieden lange dauernden Programmteilen verarbeitet werden, die Klassifikationseinheit (KE) die Häufigkeit des Auftretens der Bereiche der Eingangswerte (E) ermittelt und den Festwertspeicher so umprogrammiert, daß die Reihenfolge der Fallunterscheidungen nach der Häufigkeit des Auftretens der zugehörigen Bereiche durchgeführt wird, wobei die zum Bereich mit der größten Häufigkeit gehörende Fallunterscheidung zuerst erfolgt.

7. Schaltungsanordnung nach einem der vorhergehenden Ansprüche, bei der die Verarbeitungseinheit (VE) mit dem elektrisch löschbaren und elektrisch programmierbaren Festwertspeicher (EEPROM), die Klassifizierungseinheit (KE) und die Schnittstelleneinheit (EIF) monolithisch auf einem Halbleiter-Chip integriert sind.

## Claims

1. Self-programming circuit (SPSA),
- in which a processing unit (VE) with an electrically erasable and electrically programmable read-only memory (EEPROM), a classification unit (KE) and an interface unit (EIF) are provided, the processing unit reading out processing information from the read-only memory (EEPROM),
- in which input values (E) and/or internal values (ED, S) and/or output values (A) of the processing unit (VE) are processed in the classification unit (KE) to give classification results (K), the input values (E) and/or the output values (A) of the processing unit also representing corresponding values of the self-programming circuit (SPSA),
- in which an interface unit (EIF) is provided in such a way that from one of the classification results (K) there is generated at least one EEPROM address (EA) and at least one EEPROM datum (ED) and the read-only memory (EEPROM) is programmed therewith, if an external enabling signal (EN) is present,
- in which the processing unit (VE) comprises a fuzzy controller (FR), the knowledge base memory (KBM) of which contains the read-only memory (EEPROM),
characterized
- in that the classification unit (KE) forms the classification results (K) from the input values (E) and/or internal values (ED, S) and/or output values (A) on the basis of a linguistic protocol, as in the case of fuzzy controllers, with the aid of IF-THEN rules, the input values (E) being assigned to linguistic values of the respective input variables, the linguistic values of the input variables being logically combined with the linguistic values of the output variables, with the aid of the linguistic protocol, and the linguistic values of an output variable being assigned to the classification results (K), and
- in that the read-only memory (EEPROM) is programmed in such a way that, with the aid of an EEPROM address (EA), one of at least two alternative association functions is selected for the input variable and/or the output variable.

2. Circuit according to Claim 1, in which the read-only memory (EEPROM) is programmed in such a way that, with the aid of an EEPROM address (EA), one of at least two alternative offset values is selected for the input value (E) and/or for the output value (A).

3. Circuit according to Claim 1 or 2, in which the read-only memory (EEPROM) is programmed in such a way that, with the aid of an EEPROM address (EA), one of at least two alternative sets of rules is selected and/or for at least one rule a weighting is selected from at least two alternative weightings and/or the number of rules of a respective set of rules is fixed.

4. Circuit according to one of Claims 1 to 3, in which the read-only memory (EEPROM) is programmed in such a way that, with the aid of an EEPROM address (EA), one of at least two alternative rule evaluation methods and/or one of at least two alternative inference methods and/or one of at least two alternative defuzzification methods is selected.

5. Self-programming circuit (SPSA),
- in which a processing unit (VE) with an electrically erasable and electrically programmable read-only memory (EEPROM), a classification unit (KE) and an interface unit (EIF) are provided, the processing unit reading out processing information from the read-only memory (EEPROM),
- in which input values (E) and/or internal values (ED, S) and/or output values (A) of the processing unit (VE) are processed in the classification unit (KE) to give classification results (K), the input values (E) and/or the output values (A) of the processing unit also representing corresponding values of the self-programming circuit (SPSA),
- in which an interface unit (EIF) is provided in such a way that from one of the classification results (K) there is generated at least one EEPROM address (EA) and at least one EEPROM datum (ED) and the read-only memory (EEPROM) is programmed therewith, if an external enabling signal (EN) is present,
characterized in that the classification unit (KE) forms the classification results (K) from the input values (E) and/or internal values (ED, S) and/or output values (A) on the basis of a linguistic protocol, as in the case of fuzzy controllers, with the aid of IF-THEN rules, the input values (E) being assigned to linguistic values of the respective input variables, the linguistic values of the input variables being logically combined with the linguistic values of the output variables, with the aid of the linguistic protocol, and the linguistic values of an output variable being assigned to the classification results (K), and in that the processing unit (VE) takes the form of a microprocessor whose program memory contains the read-only memory (EEPROM).

6. Circuit according to Claim 5, in which, if there takes place in the processing a case distinction by ranges for the input values (E) and if the values within the ranges are processed by programming parts lasting various lengths of time, the classification unit (KE) determines the frequency of the occurrence of the ranges of the input values (E) and reprograms the read-only memory in such a way that the sequence of the case distinctions is carried out in accordance with the frequency of the occurrence of the associated ranges, the case distinction belonging to the range having the greatest frequency taking place first.

7. Circuit according to one of the preceding claims, in which the processing unit (VE) with the electrically erasable and electrically programmable read-only memory (EEPROM), the classification unit (VE) and the interface unit (EIF) are monolithically integrated on a semi-conductor chip.

## Revendications

1. Circuit à auto-programmation (SPSA),
- dans lequel on prévoit une unité de traitement (VE) avec une mémoire morte effaçable électriquement et programmable électriquement (EEPROM), une unité de classification (KE) et une unité d'interface (EIF), l'unité de traitement extrayant des données d'exploitation de la mémoire morte (EEPROM),
- dans lequel des valeurs d'entrée (E) et/ou des valeurs internes (ED, S) et/ou des valeurs de sortie (A) de l'unité de traitement (VE) sont traitées dans l'unité de classification (KE) afin d'obtenir des résultats de classification (K), les valeurs d'entrée (E) et/ou les valeurs de sortie (A) de l'unité de traitement représentant également des valeurs correspondantes du circuit à auto-programmation (SPSA),
- dans lequel on prévoit une unité d'interface (EIF), de manière à ce qu'au moins une adresse EEPROM (EA) et au moins une donnée EEPROM (ED) soient produites à partir de l'un des résultats de classification (K) et à ce que, grâce à elles, la mémoire morte (EEPROM) soit programmée dans le cas où un signal de validation externe (EN) est présent,
- dans lequel l'unité de traitement (VE) est formée par un régulateur flou (fuzzy) FR dont la mémoire de base de connaissances (KBM) contient la mémoire morte (EEPROM),
caractérisé
- en ce que, à partir des valeurs d'entrée (E) et/ou des valeurs internes (ED, S) et/ou des valeurs de sortie (A), l'unité de classification (KE) forme les résultats de classification (K), à l'aide de règles SI-ALORS, en se basant sur un protocole linguistique comme c'est le cas avec des régulateurs flous (fuzzy), les valeurs d'entrée (E) étant associées à des valeurs linguistiques des variables d'entrée respectives, les valeurs linguistiques des variables d'entrée étant combinées aux valeurs linguistiques des variables de sortie à l'aide du protocole linguistique et les valeurs linguistiques des variables de sortie étant associées aux résultats de classification (K), et
- en ce que la mémoire morte (EEPROM) est programmée de manière à ce que, à l'aide d'une adresse EEPROM (EA), une des ― au moins ― deux fonctions d'appartenance alternatives soit sélectionnée pour la variable d'entrée et/ou la variable de sortie.

2. Circuit selon la revendication 1, dans lequel la mémoire morte (EEPROM) est programmée de manière à ce que, à l'aide d'une adresse EEPROM (EA), une des ― au moins ― deux valeurs offset alternatives soit sélectionnée pour la valeur d'entrée (E) et/ou pour la valeur de sortie (A).

3. Circuit selon l'une des revendications 1 ou 2, dans lequel la mémoire morte (EEPROM) est programmée de manière à ce que, à l'aide d'une adresse EEPROM (EA), un des ― au moins ― deux groupes de règles alternatifs soit sélectionné et/ou, pour au moins une règle, une pondération de règle parmi au moins deux pondérations de règles soit sélectionnée et/ou le nombre de règles d'un groupe de règles respectif soit fixé.

4. Circuit selon l'une des revendications 1 à 3, dans lequel la mémoire morte (EEPROM) est programmée de manière à ce que, à l'aide d'une adresse EEPROM (EA), une parmi ― au moins ― deux méthodes alternatives d'évaluation de règles et/ou une parmi ― au moins ― deux méthodes d'interférence alternatives et/ou une parmi ― au moins ― deux méthodes de défuzzification alternatives soi(en)t sélectionnée(s).

5. Circuit à auto-programmation (SPSA),
- dans lequel on prévoit une unité de traitement (VE) avec une mémoire morte effaçable électriquement et programmable électriquement (EEPROM), une unité de classification (KE) et une unité d'interface (EIF), l'unité de traitement extrayant des données d'exploitation de la mémoire morte (EEPROM),
- dans lequel des valeurs d'entrée (E) et/ou des valeurs internes (ED, S) et/ou des valeurs de sortie (A) de l'unité de traitement (VE) sont traitées dans l'unité de classification (KE) afin d'obtenir des résultats de classification (K), les valeurs d'entrée (E) et/ou les valeurs de sortie (A) de l'unité de traitement représentant également des valeurs correspondantes du circuit à auto-programmation (SPSA),
- dans lequel on prévoit une unité d'interface (EIF), de manière à ce que, à partir de l'un des résultats de classification (K), au moins une adresse EEPROM (EA) et au moins une donnée EEPROM (ED) soient produites et à ce que, grâce à elles, la mémoire morte (EEPROM) soit programmée dans le cas où un signal de validation externe (EN) est présent,
caractérisé en ce que, à partir des valeurs d'entrée (E) et/ou des valeurs internes (ED, S) et/ou des valeurs de sortie (A), l'unité de classification (KE) forme les résultats de classification (K), à l'aide de règles Sl-ALORS, en se basant sur un protocole linguistique comme c'est le cas avec les régulateurs flous (fuzzy), les valeurs d'entrée (E) étant associées à des valeurs linguistiques des variables d'entrée respectives, les valeurs linguistiques des variables d'entrée étant combinées aux valeurs linguistiques des variables de sortie à l'aide du protocole linguistique et les valeurs linguistiques des variables de sortie étant associées aux résultats de classification (K), et en ce que l'unité de traitement (VE) est formée par un microprocesseur dont la mémoire de programmes contient la mémoire morte (EEPROM).

6. Circuit selon la revendication 5,
dans lequel, du moment que l'on procède, lors du traitement, à une distinction des cas par zones pour les valeurs d'entrée (E) et que les valeurs à l'intérieur des zones sont traitées par des parties de programme de durée différente, l'unité de classification (KE) calcule la fréquence de récurrence des zones des valeurs d'entrée (E) et reprogramme la mémoire morte de façon à ce que l'ordre des distinctions des cas soit fonction de la fréquence de récurrence des zones correspondantes, la distinction des cas appartenant à la zone ayant la fréquence la plus élevée étant effectuée en premier.

7. Circuit selon l'une quelconque des revendications précédentes, dans lequel l'unité de traitement (VE) avec la mémoire morte effaçable électriquement et programmable électriquement (EEPROM), l'unité de classification (KE) et l'unité d'interface (EIF), est intégrée sous une forme monolithique sur une puce de semi-conducteur.
